(19) **Europäisches Patentamt**
**European Patent Office**
**Office européen des brevets**

(11) **EP 2 299 288 B1**

(12) **FASCICULE DE BREVET EUROPEEN**

(45) Date de publication et mention
de la délivrance du brevet:
**03.04.2013 Bulletin 2013/14**

(51) Int Cl.:
*G01S 1/68* *(2006.01)*     *G01S 5/02* *(2010.01)*
*G08B 21/04* *(2006.01)*     *G01R 31/00* *(2006.01)*
*G01V 3/08* *(2006.01)*

(21) Numéro de dépôt: **10176599.8**

(22) Date de dépôt: **14.09.2010**

(54) **Procédé et système de localisation d'une personne, support d'enregistrement pour ce procédé**

Verfahren und System zur Lokalisierung einer Person, Aufzeichnungsträger für dieses Verfahren

Method and system for locating a person, recording medium for this method

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **15.09.2009 FR 0956333**

(43) Date de publication de la demande:
**23.03.2011 Bulletin 2011/12**

(73) Titulaire: **Commissariat à l'Énergie Atomique et aux Énergies Alternatives**
**75015 Paris (FR)**

(72) Inventeurs:
• **Favre-Reguillon, François**
**38320 Eybens (FR)**
• **Blanpain, Roland**
**38380 Entre-Deux-Guiers (FR)**
• **Vial, Franck**
**38850 Paladru (FR)**

(74) Mandataire: **Colombo, Michel et al**
**Brevinnov**
**324, rue Garibaldi**
**69007 Lyon (FR)**

(56) Documents cités:
EP-A- 1 136 829     EP-A1- 1 731 098
EP-A2- 1 705 617     WO-A1-2009/021068
US-A1- 2006 082 488     US-A1- 2009 210 177

**Description**

L'invention concerne un procédé et un système de localisation d'une personne dans un environnement équipé d'appareils électriques fixes. L'invention concerne également un support d'enregistrement d'informations pour la mise en oeuvre de ce procédé.

L'environnement est l'espace dans lequel se déplace la personne. Il s'agit typiquement d'un bâtiment tel qu'une maison ou un appartement.

Il est nécessaire dans de nombreuses applications de localiser une personne dans son environnement. Par exemple, cela est particulièrement utile pour surveiller et identifier les activités d'une personne âgée seule dans sa maison. Cela peut également être utile pour des secouristes afin qu'ils localisent rapidement la personne qui a besoin de leur assistance. Cela peut aussi être utilisé dans des applications domotiques telles que la gestion de l'énergie consommée par un bâtiment.

Jusqu'à présent, il est connu de localiser une personne dans son environnement :

- soit en équipant son environnement de capteurs de surveillance tels qu'une caméra ou de plusieurs antennes réceptrices permettant de localiser par trigonométrie la position d'un émetteur porté par la personne à localiser,
- soit en équipant cette personne d'un capteur de position tel qu'un capteur GPS (Global Positionning System) pour des applications externes.

De l'état de la technique est aussi connu de EP 1 705 617 A2.

Ces systèmes et procédés connus de localisation d'une personne dans son environnement sont complexes à mettre en oeuvre.

L'invention vise à remédier à cet inconvénient en proposant un procédé de localisation d'une personne comprenant :

- la mesure d'un champ électromagnétique rayonné par l'un de ces appareils électriques fixes à l'aide d'un magnétomètre porté par la personne à localiser,
- l'identification de l'appareil électrique fixe fonctionnant à proximité du magnétomètre par comparaison du champ magnétique mesuré avec des signatures magnétiques préenregistrées, chaque signature magnétique préenregistrée étant associée à un appareil électrique respectif présent dans l'environnement, et
- la localisation de la personne à partir de renseignements préenregistrés sur la localisation dans l'environnement de l'appareil électrique fixe identifié par sa signature magnétique.

Dans le procédé ci-dessus, une personne est localisée dans son environnement en déterminant sa proximité vis-à-vis d'un appareil électrique fixe. Il existe de très nombreux appareils électriques fixes préexistants dans l'environnement d'une personne tels que par exemple un four, une machine à laver ou un téléviseur. Il n'est donc pas nécessaire d'équiper l'environnement de la personne avec des appareils électriques fixes spécifiquement dédiés à la localisation de cette personne. Cela simplifie la mise en oeuvre de ce procédé.

Ce procédé exploite le fait que chaque appareil électrique présente « naturellement » une signature magnétique qui lui est propre. Il n'est donc pas nécessaire de concevoir ou de modifier les appareils électriques fixes présents dans l'environnement de la personne de manière à ce qu'ils présentent chacun une signature magnétique reconnaissable. Cela participe à la simplicité de la mise en oeuvre de ce procédé puisque en fin de compte le seul appareil supplémentaire qui doit être introduit dans l'environnement de la personne est le magnétomètre qu'il porte.

Les modes de réalisation de ce procédé peuvent comporter une ou plusieurs des caractéristiques suivantes :

- l'identification de l'appareil électrique comprend:

  - le calcul d'au moins un rapport entre des modules de deux composantes spectrales du champ électromagnétique mesuré à deux fréquences différentes, et
  - la comparaison de ce ou ces rapports calculés à des rapports de référence constitutifs des signatures magnétiques préenregistrées;

- le procédé comprend le filtrage du champ magnétique mesuré pour réaliser l'étape d'identification uniquement à partir des composantes spectrales du champ magnétique mesuré supérieures à 10 Hz;
- pour un environnement équipé en plus de perturbateurs magnétiques fixes aptes chacun à produire une perturbation locale du champ magnétique terrestre, le procédé comprend :

  - la mesure du champ magnétique terrestre perturbé à l'aide d'un magnétomètre porté par la personne, et

- l'identification de la perturbation locale dans laquelle se trouve le magnétomètre par comparaison du champ magnétique terrestre perturbé mesuré avec des signatures magnétiques préenregistrées de perturbations locales du champ magnétique terrestre mesurables dans cet environnement, et
- la localisation de la personne à partir de renseignements préenregistrés sur la localisation dans l'environnement de la perturbation locale identifiée par sa signature magnétique;

- le procédé comprend la mesure, à l'aide d'un magnétomètre, d'un angle entre un repère du magnétomètre solidaire de la personne et le nord magnétique;
- le procédé comprend la comparaison d'une caractéristique du champ magnétique mesuré par le magnétomètre à un seuil prédéterminé et l'inhibition de l'identification de l'appareil électrique si cette caractéristique franchit ce seuil prédéterminé et, dans le cas contraire, la poursuite de l'identification de l'appareil électrique.

Ces modes de réalisation du procédé présentent en outre les avantages suivants :

- l'utilisation d'un rapport entre les modules de deux composantes du spectre de fréquences du champ électromagnétique mesuré permet d'obtenir une signature magnétique qui ne varie pas en fonction de la distance qui sépare le magnétomètre de l'appareil électrique à identifier,
- l'utilisation des seules composantes de fréquence élevée du champ magnétique mesuré permet de rendre le procédé indépendant du champ magnétique terrestre et donc de l'endroit où il est mis en oeuvre sur le globe terrestre,
- l'utilisation de perturbations locales du champ magnétique terrestre permet d'améliorer la localisation de cette personne,
- mesurer l'angle entre le repère du magnétomètre et le nord magnétique donne en plus une indication sur l'orientation de la personne dans son environnement, et
- l'inhibition de l'identification de l'appareil électrique si une caractéristique du champ électromagnétique mesuré franchit un seuil prédéterminé permet d'éviter des traitements inutiles.

L'invention a également pour objet un support d'enregistrement d'informations comportant des instructions pour la mise en oeuvre du procédé ci-dessus, lorsque ces instructions sont exécutées par un calculateur électronique.

Enfin, l'invention a également pour objet un système de localisation d'une personne, ce système comportant :

- un magnétomètre apte à être porté par la personne à localiser,
- une base de données contenant des signatures magnétiques préenregistrées aptes chacune à permettre l'identification d'un appareil électrique fixe dans l'environnement parmi plusieurs appareils électriques fixes présents dans cet environnement, et
- un calculateur apte à:

  - identifier l'appareil électrique fixe fonctionnant à proximité du magnétomètre par comparaison du champ électromagnétique mesuré par le magnétomètre avec les signatures magnétiques préenregistrées contenues dans la base de données, et
  - à localiser la personne à partir de renseignements préenregistrés sur la localisation dans l'environnement de l'appareil électrique fixe identifié par sa signature magnétique.

Les modes de réalisation de ce système peuvent comporter la caractéristique suivante :

- le système comporte des appareils électriques fixes présents dans l'environnement dont les signatures magnétiques sont contenues dans la base de données, ces appareils électriques étant choisis dans le groupe comprenant des appareils électroménagers, des appareils d'éclairage, des convecteurs électriques, des appareils multimédia.

L'invention sera mieux comprise à la lecture de la description qui va suivre, donnée uniquement à titre d'exemple non limitatif et faite en se référant aux dessins sur lesquels :

- la figure 1 est une illustration schématique d'un système de localisation et de détermination de l'activité d'une personne dans son environnement,
- la figure 2 est une illustration schématique d'un appareil de surveillance porté par la personne surveillée par le système de la figure 1,
- les figures 3 à 6 sont des illustrations schématiques de bases de données utilisées dans le système de la figure 1,
- la figure 7 est un organigramme d'un procédé de localisation et de détermination de l'activité d'une personne à l'aide du système de la figure 1, et

• les figures 8 et 9 sont des illustrations de spectres de fréquences de deux appareils électriques différents.

Dans ces figures, les mêmes références sont utilisées pour désigner les mêmes éléments.

Dans la suite de cette description, les caractéristiques et fonctions bien connues de l'homme du métier ne sont pas décrites en détail.

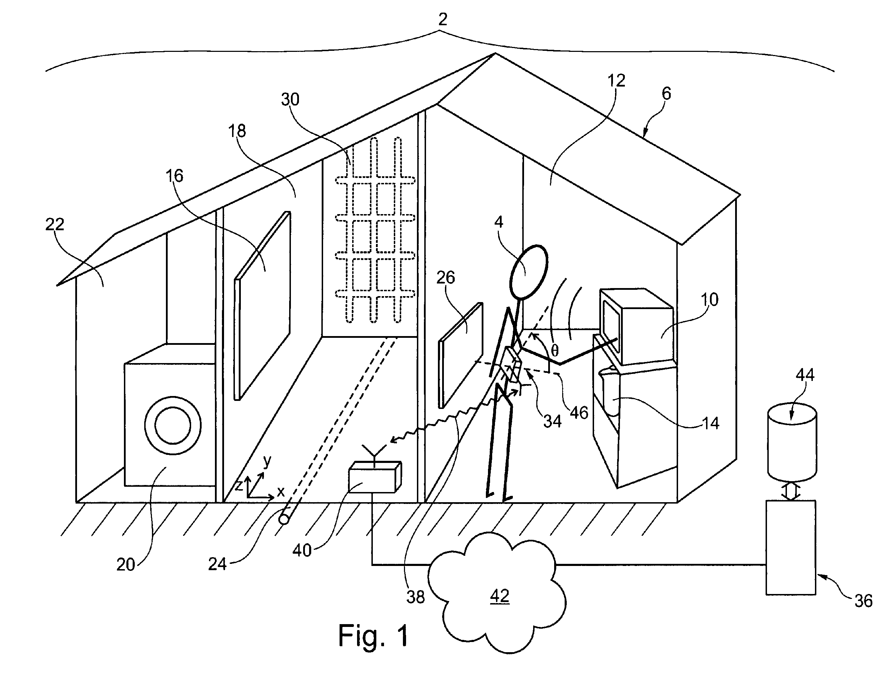

La figure 1 représente un système 2 de localisation et de détermination de l'activité d'une personne 4 dans un environnement 6. Ici, l'environnement 6 est une maison 6.

Le système 2 comprend de nombreux appareils électriques installés dans l'environnement 6.

Les appareils électriques sont des appareils alimentés par un courant électrique d'alimentation. Typiquement, le courant d'alimentation est le courant du secteur. Il s'agit donc essentiellement d'un courant alternatif dont la fréquence fondamentale est inférieure à 100 Hz. Par exemple, en Europe la fréquence fondamentale est de 50 Hz tandis qu'aux Etats-Unis elle est de 60 Hz. Les appareils électriques alimentés rayonnent à proximité un champ électromagnétique qui varie rapidement au cours du temps. On ne considère ici que la composante magnétique du champ pour lequel les phénomènes de propagation sont négligeables, le phénomène étant essentiellement un phénomène de diffusion. Le spectre de fréquences de ce champ électromagnétique rayonné présente donc des composantes « hautes fréquences », multiples entiers de la fréquence fondamentale du courant d'alimentation. Ici, le terme « haute fréquence » est défini par rapport au champ magnétique continu. Il s'agit par exemple de fréquences supérieures à 10 Hz. Le module de ces composantes hautes fréquences est plusieurs fois supérieure au bruit de fond tant que l'on se situe à proximité de l'appareil électrique. On rappelle que l'énergie du champ électromagnétique rayonné décroît très rapidement au fur et à mesure que l'on s'éloigne de l'appareil électrique. Par exemple, selon l'appareil considéré, le module du champ électromagnétique rayonné décroît proportionnellement à $1/R$ ou à $1/R^3$, où $R$ est la distance qui sépare l'appareil du magnétomètre..

Typiquement, le spectre de fréquences des appareils électriques présente un pic pour la fréquence fondamentale du courant d'alimentation et d'autres pics pour les harmoniques du courant d'alimentation. Ainsi, dans le cas d'un courant d'alimentation de 50 Hz, le spectre de fréquences de l'appareil électrique présente des pics pour la fréquence de 50 Hz et aussi pour des multiples entiers de 50 Hz. D'autres appareils peuvent également présenter des pics pour d'autres fréquences que les harmoniques de la fréquence fondamentale du courant d'alimentation. C'est par exemple le cas si l'appareil fabrique un courant d'alimentation à une fréquence différente de celle du secteur. Ainsi, il existe des appareils électriques capables de fabriquer un courant d'alimentation à 60 Hz à partir d'un courant d'alimentation à 50 Hz ou vice versa.

Un appareil électrique fixe, et plus généralement tout objet fixe, est un objet dont la position ne varie pas dans l'environnement de la personne. Par exemple, l'objet est fixe car :

- il est rigidement fixé à un support immobile tel qu'un mur ou un plafond, ou
- il est difficilement transportable à cause de son poids élevé.

On considère qu'un poids est élevé s'il est supérieur à 5 kg.

Parmi ces appareils électriques, il existe des appareils électriques qualifiés ici d'« éteignables ». Ces appareils électriques éteignables sont des appareils électriques basculables, en réponse à une commande d'une personne, entre un mode arrêté et un mode de fonctionnement. Dans le mode de fonctionnement, les appareils électriques éteignables rayonnent un champ électromagnétique correspondant à une signature magnétique caractéristique de cet appareil. En mode arrêté, les appareils électriques éteignables ne rayonnent pas de champ électromagnétique ou rayonnent un champ électromagnétique correspondant à une signature magnétique différente de celle caractérisant le même appareil en mode de fonctionnement.

Une signature magnétique d'un appareil électrique et plus généralement de toute source de champ magnétique, est un ensemble discriminant de caractéristiques du champ magnétique rayonné par cette source qui permet de l'identifier parmi plusieurs sources de champs magnétiques.

Pour simplifier la figure 1, seuls quelques exemples d'appareils électriques sont représentés.

Ici, le système 2 comprend les appareils électriques éteignables suivants:

- un four 10 installé dans une cuisine 12,
- une bouilloire 14 également installée dans la cuisine 12,
- un téléviseur 16 installé dans un salon 18, et
- une machine à laver 20 installée dans une buanderie 22.

Ces appareils électriques 10, 14, 16 et 20 ont en commun de pouvoir être basculés, directement par la personne 4, entre le mode arrêté dans lequel ces appareils électriques ne consomment pas ou consomment très peu d'énergie électrique et le mode de fonctionnement dans lequel ces appareils électriques consomment de l'énergie électrique. Par exemple, la personne 4 bascule ces appareils entre le mode arrêté et le mode de fonctionnement en appuyant sur un bouton.

Etant donné que dans le mode arrêté leur consommation d'énergie est très faible ou nulle, ils rayonnent également très peu de champ électromagnétique et ne présentent donc pas une signature magnétique décelable dans le bruit de fond. A l'inverse, en mode de fonctionnement, ces appareils présentent une signature magnétique décelable par le système 2.

Le système 2 comprend également des appareils électriques qui ne sont pas directement commandables par la personne 4. Par exemple, il peut s'agir d'un câble électrique 24 passant dans un plancher ou un mur de la maison. Il peut également s'agir d'un convecteur électrique 26 dont le basculement entre le mode arrêté et le mode de fonctionnement est automatiquement commandé à partir d'un capteur de température installé dans la maison.

Parmi ces appareils électriques, certains sont fixes tandis que d'autres sont aisément transportables par la personne 4. Ici, les appareils électriques fixes sont le four 10, le téléviseur 16, la machine à laver 20, le câble 24 et le convecteur 26. A l'inverse, la bouilloire 14 est un appareil électrique transportable.

Le système 2 comprend également des perturbateurs magnétiques fixes perturbant localement les lignes du champ magnétique terrestre sans pour cela être alimentés en courant électrique. Il peut s'agir de masses ferromagnétiques qui, si l'on supprimait le champ magnétique terrestre, ne généreraient aucun champ magnétique. Il peut également s'agir de sources de champ magnétique rémanent tel que des aimants qui génèrent un champ magnétique continu indépendamment du champ magnétique terrestre ou de toute autre source de champ magnétique.

Seuls quelques perturbateurs magnétiques ont été représentés dans l'environnement 6. Par exemple, le système 2 comprend un ferraillage 30 d'un mur en béton. L'armature métallique de la machine à laver 20 constitue également un perturbateur magnétique susceptible de produire une perturbation locale du champ magnétique terrestre décelable.

Le système 2 est équipé d'un appareil 34 de surveillance raccordé à un calculateur électronique 36. Ici, l'appareil 34 est raccordé au calculateur 36 par l'intermédiaire d'une liaison sans fil 38 entre l'appareil 34 et un récepteur 40 placé dans la maison et par un réseau 42 de transmission d'informations raccordant le récepteur 40 au calculateur 36. Le réseau 42 est un réseau de transmission d'informations sur de grandes distances tel qu'un réseau téléphonique ou le réseau Internet. A l'inverse, la liaison 38 est une liaison courte distance dont la portée est inférieure à 100 ou 300 mètres.

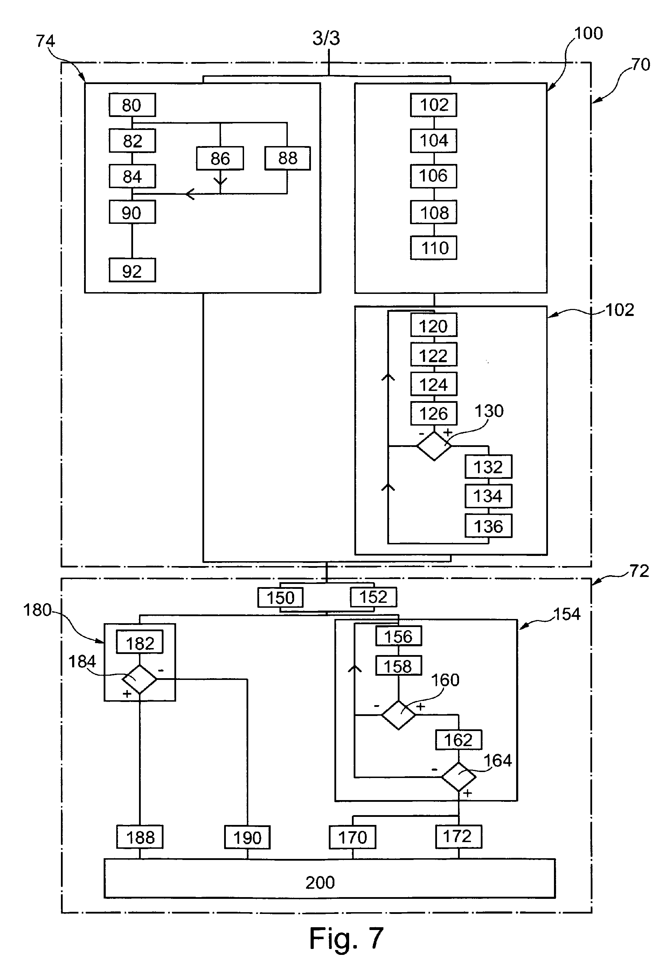

Le calculateur 36 est un calculateur programmable apte à exécuter des instructions enregistrées sur un support d'enregistrement d'informations pour mettre en oeuvre le procédé de la figure 7. A cet effet, le calculateur 36 est raccordé à une mémoire 44 contenant les données et les instructions nécessaires à l'exécution du procédé de la figure 7.

L'appareil 34 est porté par la personne 4. Par exemple, cet appareil 34 est fixé sur le torse de la personne 4. Ici, l'appareil 34 est fixé sur la personne 4 de manière suffisamment rigide pour que des axes de l'appareil 34 soient représentatifs de l'orientation du torse de la personne 4. Sur la figure 1, seul un axe 46 solidaire de l'appareil 34 est représenté. L'orientation de l'axe 46 par rapport à la direction du nord magnétique est indiquée par un angle $\theta$ sur la figure 1. Cette information est appelée le « cap ».

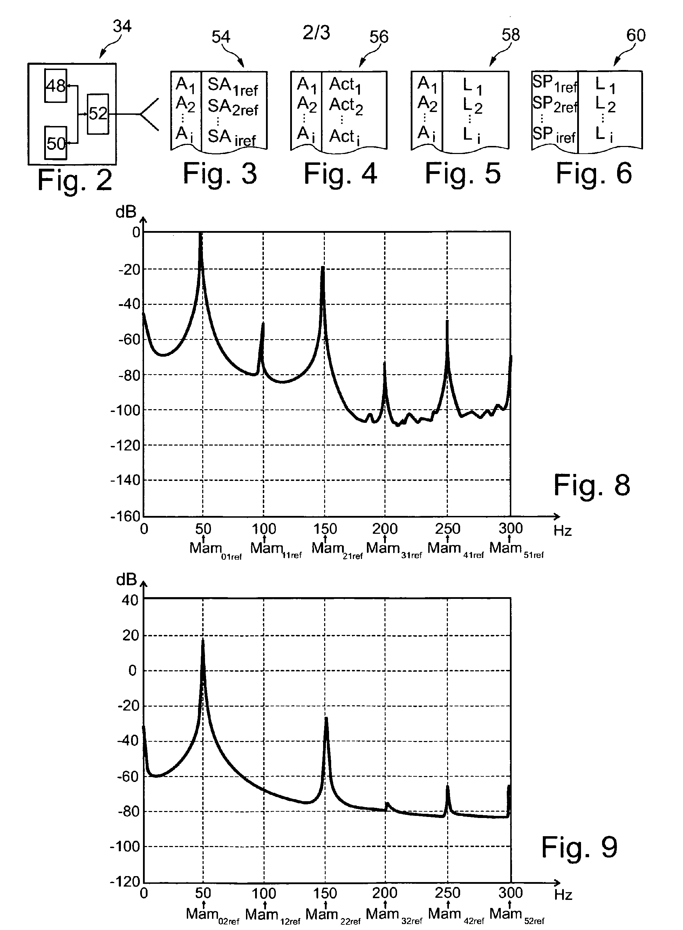

La figure 2 représente plus en détail l'appareil 34. Dans ce mode de réalisation, l'appareil 34 comprend essentiellement :

- un accéléromètre 48 apte à mesurer l'accélération de l'appareil 34 selon trois axes de mesure orthogonaux entre eux, et
- un magnétomètre 50 apte à mesurer la projection du champ magnétique sur trois axes de mesure orthogonaux, constituant le repère du magnétomètre.

Les axes de mesure de l'accéléromètre 48 et du magnétomètre 50 sont colinéaires pour simplifier les calculs.

L'accéléromètre 48 et le magnétomètre 50 sont raccordés à un émetteur 52 qui émet les données mesurées et acquises vers le calculateur 36 par l'intermédiaire de la liaison 38.

Les figures 3 à 6 représentent des bases de données 54, 56, 58 et 60 utilisées pour la mise en oeuvre du procédé de la figure 7. Par exemple, ces bases de données sont enregistrées dans la mémoire 44.

La base 54 est une base de signatures magnétiques d'appareils électriques. Cette base 54 comprend une première colonne contenant des identifiants $A_i$ des appareils électriques et une seconde colonne associant à chacun de ces identifiants $A_i$ une signature magnétique de référence $SA_{iref}$.

La base 56 associe à chaque identifiant $A_i$ d'appareil électrique éteignable un identifiant d'activité $Act_i$. L'identifiant $Act_i$ identifie une ou plusieurs activités de la personne 4 associées à l'utilisation de l'appareil correspondant à l'identifiant $A_i$. Par exemple, si l'appareil est un rasoir électrique ou une brosse à dent électrique, l'activité associée à ces appareils est la toilette du haut du corps. Si l'appareil électrique est une cuisinière, une bouilloire, un grille-pain ou un mixeur, l'activité associée est la préparation des repas. Si l'appareil électrique est un aspirateur, l'activité associée est un travail ménager. Si l'appareil électrique est un téléviseur, l'activité associée est de regarder la télévision. Ces exemples ne sont pas limitatifs et il existe de nombreuses autres activités possibles associables à l'utilisation d'un appareil électrique éteignable.

La base 58 associe à chaque identifiant $A_i$ d'un appareil électrique fixe des renseignements $L_i$ sur sa localisation dans l'environnement 6. Les renseignements $L_i$ peuvent être des coordonnées exprimées dans un référentiel XYZ fixe dans l'environnement 6 ou simplement un identifiant d'un emplacement tel que « cuisine », « salon », « buanderie »... etc. Cette base 58 constitue donc une cartographie des appareils électriques fixes dans l'environnement 6.

La base 60 associe à chaque signature magnétique de référence $SP_{iref}$ d'une perturbation locale du champ magnétique terrestre, produite par un perturbateur magnétique fixe, des renseignements $L_i$ sur la position de cette perturbation dans l'environnement 6. Comme précédemment, les renseignements $L_i$ peuvent être des coordonnées exprimées dans le référentiel XYZ ou l'identifiant d'un emplacement. Cette base 60 constitue une cartographie des perturbations locales du champ magnétique terrestre dans l'environnement 6.

Le fonctionnement du système 2 va maintenant être décrit plus en détail en regard du procédé de la figure 7.

Le procédé se déroule essentiellement en deux phases : une phase 70 d'apprentissage du système 2 suivie d'une phase 72 d'utilisation de ce système.

La phase 70 consiste à renseigner les différentes bases de données 54, 56, 58 et 60.

A cet effet, la phase 70 comprend une étape 74 de renseignement de la base de données 60.

Avant de procéder à l'étape 74 l'ensemble des appareils électriques éteignables présents est basculé dans le mode arrêté.

Ensuite, lors d'une opération 80, le magnétomètre 50 est placé à proximité d'un perturbateur magnétique de l'environnement 6 et maintenu immobile à cet emplacement.

Lors d'une opération 82, le magnétomètre 50 mesure le champ magnétique et les mesures acquises sont transmises, par exemple, au calculateur 36.

Lors d'une opération 84, les mesures acquises sont filtrées de manière à retenir uniquement les mesures représentatives du champ magnétique terrestre $H_t$. A cet effet, les composantes hautes fréquences du champ magnétique mesuré sont éliminées. Par exemple, le calculateur 36 met en oeuvre un filtre passe-bas dont la fréquence de coupure à -3 dB est inférieure ou égale à 0,1 Hz.

En parallèle des opérations 82 et 84, lors d'une opération 86, les renseignements $L_i$ sur la position actuelle du magnétomètre 50 dans l'environnement 6 sont relevés.

Egalement en parallèle de l'opération 86, lors d'une opération 88, l'accéléromètre 48 mesure la direction de la force G de gravitation terrestre dans un repère lié au capteur.

Ensuite, à partir de ces différentes mesures, lors d'une opération 90, le calculateur 36 construit la signature $SP_{iref}$ de la perturbation locale du champ magnétique terrestre $H_t$ à l'emplacement actuel du magnétomètre 50. Par exemple, lors de l'opération 90, le module $Mp_i$ et la direction du champ magnétique terrestre perturbé $H_t$ sont calculés à partir des mesures réalisées le long des trois axes de mesure du magnétomètre 50. De plus, un angle $\alpha_i$ entre la direction de la force G de gravitation et du champ $H_t$ est calculé. En absence de perturbateur magnétique, l'angle $\alpha_i$ est sensiblement égale à 30° en France. Si un perturbateur magnétique est présent à proximité du magnétomètre 50, cela modifie la direction des lignes du champ magnétique terrestre et donc la valeur de cet angle $\alpha_i$. De façon similaire, la présence à proximité du magnétomètre 50 d'un perturbateur magnétique modifie également le module du champ magnétique terrestre. Le module $Mp_i$ et l'angle $\alpha_i$ permettent donc d'identifier une perturbation locale du champ magnétique terrestre et constitue une signature magnétique de cette perturbation locale.

Lors d'une opération 92, si la signature magnétique $SP_{iref}$ construite lors de l'opération 90 est suffisamment différente de celle qui serait obtenue en absence de tout perturbateur magnétique, alors celle-ci est enregistrée dans la base 60 associée aux renseignements $L_i$ relevés lors de l'opération 86.

Ces opérations 80 à 92 sont réitérées à proximité des principaux perturbateurs magnétiques fixes de l'environnement 6 pour renseigner la base de données 60. Si certains perturbateurs magnétiques ne sont pas visibles (par exemple : une canalisation, une poutrelle métallique noyée dans du béton, ...etc.), on peut pour cela déplacer systématiquement le capteur d'un noeud à l'autre d'un quadrillage préétabli. Par exemple, les mailles de ce quadrillage sont carrées et la longueur du côté de chaque maille est égale à 1 m. La phase 70 comprend également une étape 100 de caractérisation du bruit de fond magnétique haute fréquence de l'environnement 6 suivie d'une étape 102 de renseignement des bases 54, 56 et 58.

Avant l'étape 100, l'ensemble des appareils électriques éteignables sont basculés en mode arrêté.

Au début de l'étape 100, lors d'une opération 102, le magnétomètre 50 est placé à un emplacement considéré comme représentatif du bruit de fond magnétique existant dans environnement 6. Ensuite, toujours lors de l'opération 102, le magnétomètre 50 mesure le champ magnétique et les mesures ainsi acquises sont transmises, par exemple, au calculateur 36. Les mesures sont réalisées sur des intervalles de temps successifs de durée prédéterminée $\Delta T$. Par exemple, la durée $\Delta T$ est égale à une seconde.

Lors d'une opération 104, les mesures acquises sont filtrées pour retenir uniquement les composantes hautes fréquences du champ magnétique. Par exemple, les mesures sont filtrées à l'aide d'un filtre passe-haut dont la fréquence de coupure à -3 dB est égale à 10 Hz.

Lors d'une opération 106, le spectre de fréquences du champ magnétique mesuré le long de chacun des axes de mesure pendant un intervalle de temps $\Delta T$ est calculé. Par exemple, lors de l'opération 106, un spectre de fréquences est calculé pour chacun des axes de mesure en utilisant une transformée de Fourrier rapide plus connue sous l'acronyme FFT (Fast Fourrier Transform).

Ensuite, lors d'une opération 108, un module $Ma_{0env}$ de la composante à 50 Hz du champ magnétique mesuré est calculé. Par exemple, le module $Ma_{0env}$ est calculé à partir de la norme des spectres de fréquence des différents axes de mesure.

Une fois le module $Ma_{0env}$ calculé, celui-ci est enregistré dans la mémoire 44 lors d'une opération 110.

L'étape 102 consiste à renseigner les bases de données 54, 56 et 58. Pour cela, lors d'une opération 120, le magnétomètre 50 est placé à proximité d'un appareil électrique et, si nécessaire, cet appareil électrique est basculé en mode de fonctionnement.

Ensuite, lors d'une opération 122, le magnétomètre mesure le champ magnétique rayonné par cet appareil et les mesures acquises sont transmises au calculateur 36. En même temps, les renseignements $L_i$ sur la position de cet appareil dans l'environnement 6 sont relevés.

Comme précédemment, les mesures du champ magnétique sont réalisées sur des intervalles de temps $\Delta T$ successifs, par exemple, d'une seconde.

Ensuite, lors d'une opération 124, les mesures acquises sont filtrées à l'aide d'un filtre passe-haut dont la fréquence de coupure à -3 dB est supérieure ou égale à 10 Hz. Par exemple, cette opération est identique à l'opération 104.

Ensuite, lors d'une opération 126, des modules $Ma_{jiref}$ de composantes spectrales du champ magnétique sont calculés à partir des mesures filtrées, où les indices j et i sont des identifiants, respectivement, de la composante spectrale et de l'appareil électrique. Ici, les modules $Ma_{0iref}$ à $Ma_{5iref}$ des composantes spectrales du champ magnétique, respectivement, à 50 Hz, 100 Hz, 150 Hz, 200 Hz, 250 Hz et 300 Hz sont calculés. Le module $Ma_{0iref}$ est celui de la composante à la fréquence fondamentale du courant d'alimentation et les autres modules $Ma_{1iref}$ à $Ma_{5iref}$ sont ceux des composantes aux harmoniques de la fréquence fondamentale. Par exemple, chaque module $Ma_{jiref}$ est calculé comme décrit pour le module $Ma_{0env}$.

Ensuite, lors d'une opération 130, le module $Ma_{0iref}$ est comparé au module $Ma_{0env}$ du bruit de fond. Si le module $Ma_{0iref}$ est proche ou inférieur au module $Ma_{0env}$ alors le calculateur 36 en déduit qu'il n'existe aucun appareil électrique en mode de fonctionnement et le procédé retourne à l'opération 120. Lors de cette nouvelle opération 120, il faut soit changer le magnétomètre de place pour le rapprocher de l'appareil électrique soit basculer, si cela n'avait pas déjà été fait, l'appareil électrique en mode de fonctionnement.

Dans le cas contraire, le procédé se poursuit par une opération 132 lors de laquelle les modules $Ma_{jiref}$ calculés sur plusieurs intervalles de temps $\Delta T$ successifs sont moyennés entre eux de manière à obtenir un module moyen $Mam_{jiref}$ pour chaque composante spectrale utilisée ici.

Ensuite, lors d'une opération 134, plusieurs rapports $P_{jiref}$ de référence sont calculés. Par exemple, les rapports $P_{jiref}$ sont calculés à l'aide de la formule suivante:

$$P_{jiref} = Mam_{jiref} / Mam_{0iref}, \text{ pour } j \in \{1, \ldots, 5\}$$

Les rapports $P_{jiref}$ sont caractéristiques de l'appareil électrique situé à proximité. De plus, les rapports $P_{jiref}$ présentent l'avantage de ne pas varier en fonction de la distance qui sépare le magnétomètre de l'appareil électrique.

A titre d'exemple, les spectres de fréquences, après filtrage par le filtre passe haut, d'un ventilateur et d'une bouilloire, correspondant respectivement aux identifiants $A_1$ et $A_2$, ont été représentés, respectivement, sur les figures 8 et 9. Les modules $Mam_{jiref}$ sont très différents d'un appareil électrique à l'autre ce qui est utilisé ici pour les identifier.

Les différents rapports $P_{jiref}$ calculés pour un appareil électrique correspondant à l'identifiant $A_i$ constituent la signature magnétique $SA_{iref}$ de cet appareil.

Enfin, lors d'une opération 136, la signature $SA_{iref}$ construite est enregistrée dans la base de données 54 associée à l'identifiant $A_i$ de l'appareil électrique correspondant.

Lors de cette opération 136, si l'appareil électrique dont la signature magnétique a été construite est un appareil électrique fixe, alors la base de données 58 est complétée avec les renseignements $L_i$ sur la position de cet appareil relevés lors de l'opération 122.

Enfin, si l'appareil électrique dont la signature magnétique a été construite est un appareil électrique éteignable alors la base de données 56 est également complétée en associant à l'identifiant $A_i$ un identifiant $Act_i$ de l'activité correspondante.

Les opérations 120 à 136 sont réitérées pour les principaux appareils électriques présents dans l'environnement 6. Cela inclut donc ici le four 10, la bouilloire 14, le téléviseur 16, la machine à laver 20, le conducteur électrique 24 et le convecteur 26.

Une fois la phase 70 d'apprentissage terminée, il est alors possible de procéder à la phase 72 d'utilisation.

Lors de la phase 72, l'appareil 34 est porté, par exemple en permanence, par la personne 4.

Lors d'une étape 150, le magnétomètre 50 mesure en permanence le champ magnétique. En parallèle, lors d'une étape 152, l'accéléromètre 48 mesure en permanence les accélérations subies par l'appareil 34.

Ces mesures sont transmises au calculateur 36 par l'intermédiaire de la liaison 38, du récepteur 40 et du réseau 42.

A partir de ces mesures, le calculateur 36 identifie, lors d'une étape 154, l'appareil électrique à proximité de la personne 4.

A cet effet, lors d'une opération 156, les mesures du magnétomètre sont filtrées à l'aide d'un filtre passe-haut. Cette opération 156 est par exemple identique à l'opération 104 ou 124.

Ensuite, lors d'une opération 158, des modules $Ma_j$ des composantes spectrales, respectivement, aux fréquences de 50 Hz, 100 Hz, 150 Hz, 200 Hz, 250 Hz et 300 Hz sont calculées. Les modules $Ma_j$ sont calculés comme décrit pour les modules $Ma_{jiref}$ lors de l'opération 126.

Lors de l'opération 160, le module $Ma_0$ calculé est comparé au module $M_{0env}$ du bruit de fond. Si le module $Ma_0$ est voisin ou inférieur au module $M_{0env}$, alors le procédé retourne à l'étape 156 pour traiter les mesures réalisées sur l'intervalle de temps $\Delta T$ suivant. En effet, cela signifie qu'il n'y a pas d'appareil électrique à proximité du magnétomètre 50.

Dans le cas contraire, lors d'une opération 162, le calculateur 36 procède à la construction d'une signature magnétique SA de l'appareil électrique situé à proximité du magnétomètre 50. Par exemple, l'opération 162 est identique aux opérations 132 et 134 réunies sauf qu'elles sont appliquées aux mesures réalisées lors de l'étape 150. La signature SA est composée des rapports $P_j$ entre les modules $Mam_j$ et le module $Mam_0$.

Ensuite, lors d'une opération 164, la signature SA est comparée aux signatures $SA_{iref}$ contenues dans la base de données 54. Si la signature SA correspond à l'une des signatures de référence $SA_{iref}$, alors l'identifiant de l'appareil électrique $A_i$ associé à cette signature $SA_{iref}$ est retrouvé. Lorsque l'identifiant $A_i$ d'un appareil est retrouvé, cet appareil électrique est considéré comme identifié. Dans le cas contraire, aucun appareil électrique n'est identifié et le procédé retourne à l'opération 156 pour traiter les mesures réalisées sur l'intervalle de temps $\Delta T$ suivant.

Ici, la signature SA est comparée aux signatures $SA_{iref}$ à l'aide de la formule suivante :

$$S = \sum_{j=1}^{6} (P_j - P_{jiref})^2$$

La signature SA correspond à une signature de référence $SA_{iref}$ si cette somme S est inférieure à un seuil prédéterminé.

Lorsqu'un appareil électrique fixe est identifié, le procédé se poursuit par une étape 170 de localisation de la personne 4. Cette étape 170 consiste à retrouver dans la base de données 58 les renseignements $L_i$ associés à l'identifiant $A_i$. En effet, suite à l'étape 154, on sait que la personne 4 se trouve à proximité de l'appareil électrique identifié. Si l'identifiant $A_i$ est celui d'un appareil fixe dans l'environnement 6, alors cela donne une indication sur la position de la personne 4 dans son environnement. Par exemple, les renseignements $L_i$ sont suffisamment précis pour indiquer dans quelle pièce de la maison se trouve la personne 4.

En parallèle, si l'appareil électrique identifié est un appareil électrique éteignable, lors d'une étape 172, l'activité de la personne 4 est déterminée. Lors de cette étape 172, le calculateur 36 recherche dans la base de données 56 l'identifiant $Act_i$ associé à l'identifiant $A_i$ retrouvé. Par exemple, si la personne 4 a basculé en mode de fonctionnement la bouilloire 14, cela indique, avec un degré de certitude élevé, que cette personne 4 est en train de préparer son repas.

En parallèle de l'étape 154, lors d'une étape 180, les mesures du magnétomètre et de l'accéléromètre sont aussi utilisées pour identifier une perturbation locale du champ magnétique terrestre.

Pour cela, lors d'une opération 182, une signature magnétique SP d'une perturbation locale du champ magnétique terrestre dans lequel se trouve l'appareil 34 est construite. L'opération 182 est par exemple identique aux opérations 82, 84 et 90 réunies sauf qu'elles sont appliquées aux mesures réalisées lors des étapes 150 et 152.

Ensuite, lors d'une opération 184, la signature SP est comparée aux signatures de référence $SP_{iref}$ contenues dans la base de données 60. Par exemple, cette comparaison est réalisée comme décrit en regard de l'opération 164.

Si la signature SP correspond à l'une des signatures de référence $SP_{iref}$, alors une perturbation magnétique locale est identifiée.

Le procédé se poursuit alors par une étape 188 de localisation de la personne 4 à partir de la perturbation magnétique identifiée. Lors de l'étape 188, les renseignements $L_i$ associés à la signature $SP_{iref}$ correspondant à la signature SP sont retrouvés dans la base de données 60. On dispose donc ainsi d'une indication sur la position de la personne 4 dans son environnement suffisante, par exemple, pour indiquer dans quelle pièce se trouve cette personne.

Dans le cas où la signature SP ne correspond à aucune des signatures $SP_{iref}$ car tout simplement le magnétomètre ne se trouve pas à proximité d'un perturbateur magnétique, alors on procède à une étape 190, lors de laquelle l'angle θ entre le nord magnétique et l'axe 46 est relevé. La direction du nord magnétique est obtenue à partir des mesures réalisées lors de l'étape 150 par le magnétomètre.

Lors d'une étape 200, les informations obtenues à l'issue des étapes 170, 172, 188 et 190 sont traitées à différentes fins.

Par exemple, lors de l'étape 200, les renseignements sur la localisation de la personne 4 obtenues à l'issue des étapes 170 et 188 sont croisés pour préciser ou confirmer la localisation de cette personne.

Les informations sur la localisation de la personne 4 et les indications sur l'activité de cette personne au même instant sont croisées pour préciser ou confirmer l'activité de la personne.

Lors de l'étape 200, l'orientation de la personne obtenue à l'issue de l'étape 190 et les indications sur l'activité de cette personne obtenues à l'étape 172 sont croisées pour préciser ou confirmer l'activité de la personne. Par exemple, s'il a été déterminé que la personne 4 regarde la télévision et que l'orientation obtenue à l'issue de l'étape 190 de cette personne 4 est incompatible avec cette activité alors l'activité en question n'est pas confirmée et, éventuellement, un comportement anormal est signalé. De façon similaire, si les informations obtenues sur la position de la personne indique que celle-ci est dans son lit et que l'orientation mesurée lors de l'étape 190 indique que la personne 4 est allongée au travers du lit, alors une nouvelle indication de comportement anormal est déclenchée.

Lors de l'étape 200, les différentes informations relevées peuvent être utilisées pour déterminer le degré de dépendance de la personne 4. Pour cela, par exemple, on compare les activités relevées et leurs fréquences à un comportement « standard ». Les déviations du comportement de la personne par rapport à ce comportement standard indiquent une perte d'indépendance de cette personne.

De nombreux autres modes de réalisation sont possibles. Par exemple, le magnétomètre peut être un capteur magnétique vectoriel apte à mesurer l'amplitude de la projection du champ magnétique sur plusieurs axes de mesure ou un capteur magnétique scalaire qui mesure le module du champ. Le capteur magnétique scalaire est, de préférence, un capteur magnétique scalaire isotrope, c'est-à-dire dont la mesure est indépendante de son orientation dans l'espace. Un capteur magnétique scalaire peut se révéler moins encombrant et moins coûteux.

La base 54 de signatures des appareils électriques peut être commune à différents environnements de différentes personnes.

L'identification des appareils électriques ou des perturbations locales du champ magnétique terrestre peut être réalisée en temps réel ou de façon différée. Si cette identification est réalisée en temps réel, de préférence, l'appareil 34 est remplacé par un appareil équipé d'un calculateur apte à réaliser localement l'ensemble des calculs nécessaires à cette identification. Si l'identification est réalisée de façon différée, l'architecture du système 2 décrite ici est suffisante.

Si plusieurs appareils électriques à proximité l'un de l'autre sont utilisés en même temps, des techniques de séparation de sources de champ magnétique peuvent être utilisées pour déterminer la contribution de chaque appareil au champ magnétique mesuré par le magnétomètre. On pourra se référer à cet effet aux documents suivants : « Séparation aveugle de mélange convolutif de sources », thèse de H. Boumaraf, 26 octobre 2005, accessible au public sur l'un des sites Internet suivants : http://www-ljk.imag.fr ou http://tel.archives-ouvertes.fr/tel-00011643/fr/

Le bruit de fond utilisé pour déterminer l'absence d'un appareil électrique à proximité du magnétomètre peut être une moyenne temporelle de l'évolution du champ électromagnétique mesuré au cours d'une plage de temps ou une amplitude instantanée de ce champ magnétique mesuré ou une combinaison du module du champ magnétique mesuré pour plusieurs fréquences.

La localisation de la personne 4 à partir des perturbations locales du champ magnétique terrestre peut être omise pour simplifier le procédé.

De même, la mesure de l'orientation de la personne 4 par rapport au nord magnétique peut être omise.

Si la distance R qui sépare le magnétomètre de l'appareil électrique est suffisante pour que cet appareil électrique puisse être modélisé comme étant un dipôle, alors il est également possible d'estimer cette distance R à partir des mesures du magnétomètre. La distance ainsi estimée est alors utilisée pour préciser la localisation ou l'activité de la personne 4.

L'étape 100 de caractérisation du bruit de fond peut également être omise s'il n'existe pas de perturbation magnétique haute fréquence importante dans l'environnement 6.

La comparaison d'une signature magnétique construite à celles contenues dans une base de données peut être réalisée par de nombreuses méthodes différentes. Par exemple, à cet effet, on pourra se référer à l'ouvrage suivant :

« Apprentissage artificiel : Concepts et algorithmes », A. Cornuégiols - L. Miclet - Y. Kodratoff - T. Mitchel, édition Eyrolles, 2ième édition.

En particulier, l'identification de la signature construite peut être réalisée par apprentissage:

- par estimation de densité de probabilité en utilisant des réseaux bayésiens,
- par optimisation à l'aide de réseaux de neurones ou de séparateurs à vaste marge (SVM), ou

- par arbre de décision.

D'autres signatures magnétiques que celles décrites ici peuvent être utilisées. Par exemple la signature magnétique peut être une évolution temporelle caractéristique du champ électromagnétique rayonné par l'appareil électrique. D'autres rapports que les rapports au module de la composante à la fréquence fondamentale peuvent être utilisés pour caractériser le champ magnétique rayonné par un appareil électrique. De façon similaire, une perturbation locale du champ magnétique terrestre peut être caractérisé uniquement par son module $Mp_i$ ou uniquement par l'angle $\alpha_i$.

Le filtrage à l'aide d'un filtre passe-haut peut être remplacé par un filtre passe-bande et de préférence un filtre passe-bande ayant une bande passante comprise entre 5 Hz et 1 kHz.

Lors de l'opération 108, le module $Ma_{0env}$ peut être remplacé par une moyenne entre différents modules $Ma_{0env}$ calculés sur différents intervalles $\Delta T$ successifs.

Un module $Ma_{0env}$ peut être calculé en un seul emplacement de l'environnement 6 ou en plusieurs emplacements. Dans ce dernier cas, si plusieurs modules $Ma_{0env}$ sont calculés, soit ils sont enregistrés individuellement dans la mémoire 44 soit le module $Ma_{0env}$ est remplacé pour la suite des opérations par une moyenne de ces différents modules $Ma_{0env}$.

En variante, le magnétomètre 50 est alimenté par auto-induction c'est-à-dire en exploitant le champ magnétique rayonné par les appareils électriques situés à proximité.

Ici, le magnétomètre décrit est le même pour mesurer les champs magnétiques hautes fréquences et basses fréquences. En variante, deux magnétomètres différents sont utilisés pour mesurer chacun l'un de ces champs magnétiques.

Les renseignements sur la localisation d'un objet dans l'environnent peuvent être relevés à l'aide d'appareils de mesure tels que, par exemple, un appareil de localisation GPS dans les environnements où une telle localisation est possible.

Le procédé de localisation des personnes à partir de perturbation locale du champ magnétique terrestre peut être mis en oeuvre indépendamment des autres procédés décrits ici et, en particulier, indépendamment du procédé de localisation d'une personne à partir des champs électromagnétiques rayonnés par des appareils électriques fixes.

**Revendications**

1. Procédé de localisation d'une personne dans un environnement équipé d'appareils électriques fixes, **caractérisé en ce que** ce procédé comprend :

   - la mesure (150) d'un champ électromagnétique rayonné par l'un de ces appareils électriques fixes à l'aide d'un magnétomètre porté par la personne à localiser,
   - l'identification (154) de l'appareil électrique fixe fonctionnant à proximité du magnétomètre par comparaison du champ magnétique mesuré avec des signatures magnétiques préenregistrées, chaque signature magnétique préenregistrée étant associée à un appareil électrique respectif présent dans l'environnement, et
   - la localisation (170) de la personne à partir de renseignements préenregistrés sur la localisation dans l'environnement de l'appareil électrique fixe identifié par sa signature magnétique.

2. Procédé selon la revendication 1, dans lequel l'identification de l'appareil électrique comprend :

   - le calcul (162) d'au moins un rapport entre des modules de deux composantes spectrales du champ électromagnétique mesuré à deux fréquences différentes, et
   - la comparaison (164) de ce ou ces rapports calculés à des rapports de référence constitutifs des signatures magnétiques préenregistrées.

3. Procédé selon l'une quelconque des revendications précédentes, dans lequel le procédé comprend le filtrage (156) du champ magnétique mesuré pour réaliser l'étape d'identification uniquement à partir des composantes spectrales du champ magnétique mesuré supérieures à 10 Hz.

4. Procédé selon l'une quelconque des revendications précédentes pour un environnement comprenant en plus de perturbateurs magnétiques fixes aptes chacun à produire une perturbation locale du champ magnétique terrestre, dans lequel le procédé comprend :

   - la mesure (150) du champ magnétique terrestre perturbé à l'aide d'un magnétomètre porté par la personne, et
   - l'identification (180) de la perturbation locale dans laquelle se trouve le magnétomètre par comparaison du champ magnétique terrestre perturbé mesuré avec des signatures magnétiques préenregistrées de perturbations locales du champ magnétique terrestre mesurables dans cet environnement, et
- la localisation (188) de la personne à partir de renseignements préenregistrés sur la localisation dans l'environnement de la perturbation locale identifiée par sa signature magnétique.

**5.** Procédé selon l'une quelconque des revendications précédentes, dans lequel le procédé comprend la mesure (152), à l'aide d'un magnétomètre, d'un angle entre un repère du magnétomètre solidaire de la personne et le nord magnétique.

**6.** Procédé selon l'une quelconque des revendications précédentes, dans lequel le procédé comprend la comparaison (160) d'une caractéristique du champ magnétique mesuré par le magnétomètre à un seuil prédéterminé et l'inhibition de l'identification de l'appareil électrique si cette caractéristique franchit ce seuil prédéterminé et, dans le cas contraire, la poursuite de l'identification de l'appareil électrique.

**7.** Support (44) d'enregistrement d'informations, **caractérisé en ce qu'**il comporte des instructions pour la mise en oeuvre d'un procédé conforme à l'une quelconque des revendications précédentes, lorsque ces instructions sont exécutées par un calculateur électronique.

**8.** Système de localisation d'une personne dans un environnement, **caractérisé en ce que** ce système comporte :

- un magnétomètre (50) apte à être porté par la personne à localiser,
- une base (54) de données contenant des signatures magnétiques préenregistrées aptes chacune à permettre l'identification d'un appareil électrique fixe dans l'environnement parmi plusieurs appareils électriques fixes présents dans cet environnement, et
- un calculateur (36) apte à :

• identifier l'appareil électrique fixe fonctionnant à proximité du magnétomètre par comparaison du champ électromagnétique mesuré par le magnétomètre avec les signatures magnétiques préenregistrées contenues dans la base de données, et
• à localiser la personne à partir de renseignements préenregistrés sur la localisation dans l'environnement de l'appareil électrique fixe identifié par sa signature magnétique.

**9.** Système selon la revendication 8, dans lequel le système comporte des appareils électriques fixes (10, 16, 20, 24, 26) présents dans l'environnement dont les signatures magnétiques sont contenues dans la base (54) de données, ces appareils électriques étant choisis dans le groupe comprenant des appareils électroménagers, des appareils d'éclairage, des convecteurs électriques, des appareils multimédias.

**10.** Système selon l'une quelconque des revendications 8 à 9, dans lequel le magnétomètre est un magnétomètre scalaire isotrope.

**Claims**

**1.** Method for locating a person in an environment equipped with fixed electrical appliances, **characterized in that** this method comprises:

- the measurement (150) of an electromagnetic field radiated by one of these fixed electrical appliances with the aid of a magnetometer carried by the person to be located,
- the identification (154) of the fixed electrical appliance operating in proximity to the magnetometer by comparing the measured magnetic field with prerecorded magnetic signatures, each prerecorded magnetic signature being associated with a respective electrical appliance present in the environment, and
- the location (170) of the person on the basis of prerecorded details about the location in the environment of the fixed electrical appliance identified by its magnetic signature.

**2.** Method according to Claim 1, in which the identification of the electrical appliance comprises:

- the computation (162) of at least one ratio between moduli of two spectral components of the electromagnetic field measured at two different frequencies, and

- the comparison (164) of this or these computed ratios with constituent reference ratios of the prerecorded magnetic signatures.

3. Method according to either one of the preceding claims, in which the method comprises the filtering (156) of the measured magnetic field so as to carry out the identification step solely on the basis of the spectral components of the measured magnetic field that are greater than 10 Hz.

4. Method according to any one of the preceding claims for an environment comprising in addition fixed magnetic disturbers each able to produce a local disturbance of the terrestrial magnetic field, in which the method comprises:

   - the measurement (150) of the disturbed terrestrial magnetic field with the aid of a magnetometer carried by the person, and
   - the identification (180) of the local disturbance in which the magnetometer is situated by comparing the measured disturbed terrestrial magnetic field with prerecorded magnetic signatures of measurable local disturbances of the terrestrial magnetic field in this environment, and
   - the location (188) of the person on the basis of prerecorded details about the location in the environment of the local disturbance identified by its magnetic signature.

5. Method according to any one of the preceding claims, in which the method comprises the measurement (152), with the aid of a magnetometer, of an angle between a reference frame of the magnetometer bound to the person and magnetic North.

6. Method according to any one of the preceding claims, in which the method comprises the comparison (160) of a characteristic of the magnetic field measured by the magnetometer with a predetermined threshold and the inhibition of the identification of the electrical appliance if this characteristic crosses this predetermined threshold and, in the converse case, the continuation of the identification of the electrical appliance.

7. Medium (44) for recording information, **characterized in that** it comprises instructions for the implementation of a method in accordance with any one of the preceding claims, when these instructions are executed by an electronic computer.

8. System for locating a person in an environment, **characterized in that** this system comprises:

   - a magnetometer (50) able to be carried by the person to be located,
   - a database (54) containing prerecorded magnetic signatures each able to allow the identification of a fixed electrical appliance in the environment from among several fixed electrical appliances present in this environment, and
   - a computer (36) able to:

      • identify the fixed electrical appliance operating in proximity to the magnetometer by comparing the electromagnetic field measured by the magnetometer with the prerecorded magnetic signatures contained in the database, and
      • to locate the person on the basis of prerecorded details about the location in the environment of the fixed electrical appliance identified by its magnetic signature.

9. System according to Claim 8, in which the system comprises fixed electrical appliances (10, 16, 20, 24, 26) present in the environment whose magnetic signatures are contained in the database (54), these electrical appliances being chosen from the group comprising electro-domestic appliances, lighting appliances, electric convectors, multimedia appliances.

10. System according to either one of Claims 8 and 9, in which the magnetometer is an isotropic scalar magnetometer.

**Patentansprüche**

1. Verfahren zum Lokalisieren einer Person in einer Umgebung, die mit ortsfesten elektrischen Geräten ausgestattet ist, **dadurch gekennzeichnet, dass** dieses Verfahren Folgendes aufweist:

- das Messen (150) eines elektromagnetischen Feldes, das durch eines dieser ortsfesten elektrischen Geräte ausgestrahlt wird, mittels eines Magnetometers, das die zu lokalisierende Person mit sich führt,
- das Identifizieren (154) des ortsfesten elektrischen Geräts, das in der Nähe des Magnetometers betrieben wird, durch Vergleichen des gemessenen magnetischen Feldes mit vorhergehend aufgezeichneten magnetischen Signaturen, wobei jede vorhergehend aufgezeichnete magnetische Signatur einem entsprechenden elektrischen Gerät zugehörig ist, das in der Umgebung vorhanden ist, und
- das Lokalisieren (170) der Person ausgehend von vorhergehend aufgezeichneten Angaben über den Ort des durch seine magnetische Signatur identifizierten ortsfesten elektrischen Geräts in der Umgebung.

2. Verfahren nach Anspruch 1, wobei die Identifizierung des elektrischen Geräts Folgendes aufweist:

- das Berechnen (162) mindestens eines Verhältnisses zwischen Modulen von zwei Spektralkomponenten des elektromagnetischen Feldes, das bei zwei unterschiedlichen Frequenzen gemessen wird, und
- das Vergleichen (164) dieses oder dieser berechneten Verhältnisse mit Bezugsverhältnissen, die vorhergehend aufgezeichnete magnetische Signaturen bilden.

3. Verfahren nach einem der vorhergehenden Ansprüche, wobei das Verfahren das Filtern (156) des gemessenen magnetischen Feldes zum Ausführen des Schritts der Identifizierung einzig ausgehend von den Spektralkomponenten des gemessenen magnetischen Feldes aufweist, die höher als 10 Hz sind.

4. Verfahren nach einem der vorhergehenden Ansprüche für eine Umgebung, die darüber hinaus ortsfeste magnetische Störer aufweist, die jeweils geeignet sind, eine lokale Störung des magnetischen Feldes der Erde zu erzeugen, wobei das Verfahren Folgendes aufweist:

- das Messen (150) des gestörten magnetischen Feldes der Erde mittels eines Magnetometers, das die Person mit sich führt, und
- das Identifizieren (180) der lokalen Störung, in der sich das Magnetometer befindet, durch Vergleichen des gemessenen gestörten magnetischen Feldes der Erde mit vorhergehend aufgezeichneten magnetischen Signaturen von lokalen Störungen des magnetischen Feldes der Erde, die in dieser Umgebung gemessen werden können, und
- das Lokalisieren (188) der Person ausgehend von vorhergehend aufgezeichneten Angaben über den Ort der durch ihre magnetische Signatur identifizierten lokalen Störung in der Umgebung.

5. Verfahren nach einem der vorhergehenden Ansprüche, wobei das Verfahren das Messen (152) eines Winkels zwischen einem Bezugspunkt des Magnetometers, das fest mit der Person verbunden ist, und magnetisch Nord mittels eines Magnetometers aufweist.

6. Verfahren nach einem der vorhergehenden Ansprüche, wobei das Verfahren das Vergleichen (160) eines Merkmals des durch das Magnetometer gemessenen magnetischen Feldes mit einem vorbestimmten Schwellenwert und das Verhindern der Identifizierung des elektrischen Geräts, wenn dieses Merkmal diesen vorbestimmten Schwellenwert überschreitet, und, im gegenteiligen Fall, das Fortsetzen der Identifizierung des elektrischen Geräts aufweist.

7. Träger (44) zur Aufzeichnung von Informationen, **dadurch gekennzeichnet, dass** er Befehle für die Durchführung eines Verfahrens nach einem der vorhergehenden Ansprüche aufweist, wenn diese Befehle durch einen elektronischen Rechner ausgeführt werden.

8. System zur Lokalisierung einer Person in einer Umgebung, **dadurch gekennzeichnet, dass** dieses System Folgendes aufweist:

- ein Magnetometer (50), das geeignet ist, durch die zu lokalisierende Person mitgeführt zu werden,
- eine Datenbank (54), die vorhergehend aufgezeichnete magnetische Signaturen enthält, die jeweils dazu geeignet sind, die Identifizierung eines ortsfesten elektrischen Geräts in der Umgebung unter mehreren ortsfesten elektrischen Geräten zu ermöglichen, die in dieser Umgebung vorhanden sind, und
- einen Rechner (36), der für Folgendes geeignet ist:

• Identifizieren des ortsfesten elektrischen Geräts, das in der Nähe des Magnetometers betrieben wird, durch Vergleichen des durch das Magnetometer gemessenen elektromagnetischen Feldes mit vorhergehend aufgezeichneten magnetischen Signaturen, die in der Datenbank enthalten sind, und

• Lokalisieren der Person ausgehend von vorhergehend aufgezeichneten Angaben über den Ort des durch seine magnetische Signatur identifizierten ortsfesten elektrischen Geräts in der Umgebung.

9. System nach Anspruch 8, wobei das System ortsfeste elektrische Geräte (10, 16, 20, 24, 26) aufweist, die in der Umgebung vorhanden sind und deren magnetische Signaturen in der Datenbank (54) enthalten sind, wobei diese elektrischen Geräte in der Gruppe ausgewählt sind, die Haushaltselektrogeräte, Beleuchtungsgeräte, elektrische Konvektionsöfen und Multimediageräte aufweist.

10. System nach einem der Ansprüche 8 bis 9, wobei das Magnetometer ein isotropes skalares Magnetometer ist.

Fig. 1

34

54

2/3

56

58

60

**Fig. 2**

| $A_1$ | $SA_{1ref}$ |
|---|---|
| $A_2$ | $SA_{2ref}$ |
| ⋮ | ⋮ |
| $A_i$ | $SA_{iref}$ |

**Fig. 3**

| $A_1$ | $Act_1$ |
|---|---|
| $A_2$ | $Act_2$ |
| ⋮ | ⋮ |
| $A_i$ | $Act_i$ |

**Fig. 4**

| $A_1$ | $L_1$ |
|---|---|
| $A_2$ | $L_2$ |
| ⋮ | ⋮ |
| $A_i$ | $L_i$ |

**Fig. 5**

| $SP_{1ref}$ | $L_1$ |
|---|---|
| $SP_{2ref}$ | $L_2$ |
| ⋮ | ⋮ |
| $SP_{iref}$ | $L_i$ |

**Fig. 6**

**Fig. 8**

$Mam_{01ref}$  $Mam_{11ref}$  $Mam_{21ref}$  $Mam_{31ref}$  $Mam_{41ref}$  $Mam_{51ref}$

**Fig. 9**

$Mam_{02ref}$  $Mam_{12ref}$  $Mam_{22ref}$  $Mam_{32ref}$  $Mam_{42ref}$  $Mam_{52ref}$

3/3

Fig. 7

**EP 2 299 288 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1705617 A2

**Littérature non-brevet citée dans la description**

- **H. BOUMARAF.** *Séparation aveugle de mélange convolutif de sources,* 26 Octobre 2005, http://www-ljk.imag.fr ou http://tel.archives-ouvertes.fr/tel-00011643/fr

- **A. CORNUÉGIOLS ; L. MICLET ; Y. KODRATOFF ; T. MITCHEL.** Apprentissage artificiel : Concepts et algorithmes